# EUROPEAN PATENT SPECIFICATION

(11) **EP 0 448 394 B1**
(45) Date of publication and mention of the grant of the patent: **31.08.1994**
(21) Application number: 91302465.9
(22) Date of filing: 21.03.1991
(51) Int. Cl.: B67D 1/00, B67D 1/10, G01F 11/02, B01F 15/04

(54) **A dispenser for fluids**
Spender für Flüssigkeiten
Distributeur de fluides

(30) Priority: 23.03.1990 GB 9006565
(43) Date of publication of application: 25.09.1991
(73) Proprietor: ALAN COURTENAY LIMITED, Poole, Dorset BH17 7AF (GB)
(72) Inventor: Mutlow, Richard Benjamin, Poole, Dorset BH14 9LR (GB); Courtenay, Alan James, Poole, Dorset BH14 9JS (GB)
(74) Representative: Archer, Philip Bruce

(56) References cited:
- EP-A- 0 290 048
- FR-A- 1 469 375
- FR-A- 2 403 295
- GB-A- 1 305 630
- US-A- 3 727 799

## Description

This invention is concerned with apparatus for mixing and dispensing liquids and in particular with reference to its application for mixing and dispensing different liquids in measured proportions and quantities.

It is usual in establishments that serve fruit drinks to keep a supply of fruit juice concentrate and mix that at the time of serving with water. It is difficult to accurately dispense the correct proportionate mix of concentrate and water during a busy period at a bar or serving area, when distractions are taking place, and dissatisfaction amongst customers occurs if the drink served appears to be either too weak or too strong.

It is known to provide apparatus for dispensing a mixture of two different liquids, each in a measured quantity using two piston cylinder units, one for each different liquid and each cylinder having a set volume. One arrangement is shown in European Patent Specification No. 0197655 wherein a quantity of water is drawn into a first cylinder to one side of a piston and a quantity of concentrate is drawn into a second cylinder to one side of its associated piston. Reverse motion of each piston simultaneously expels both water and concentrate to a nozzle and thence to the chosen drinking vessels. The arrangement described is electrically operated and is unduly complicated and expensive to produce, to install and maintain.

British Patent Specification No. 1307521 discloses, in conjunction with British Patent Specification No. 1306922, an arrangement for dispensing mixed drinks, but simply dispenses each of two liquids in turn separately, without mixing, before reaching the drinking vessels. The apparatus described and illustrated is complicated and expensive.

There is disclosed in FR-A-1469375 apparatus for dispensing mixed fluids as defined in the pre-characterising portion of claim 1 hereof. This specification describes a plastics injection machine in which a common drive operates a number of piston pumps. The pumps feed plastics material through non-return valves into a mixing chamber from which the mixed material flows into a mould.

In accordance with this invention, there is provided apparatus for dispensing mixed fluids, each in a measured quantity, including a multiple piston cylinder unit having at least two cylinders and each having a piston reciprocable therein, means for simultaneously reciprocating the pistons, passageways from each cylinder to a fluid mixing nozzle, and valve means associated with each passageway to control the ingress and egress of fluid to and from each cylinder, the means for reciprocating the pistons including a manually operable lever connected to the pistons by means of piston rods pivotally connected to one or more arms of the manually operable lever, the multiple piston cylinder unit being pivotally mounted on a bracket secured to a serving area and the bracket carrying a pivot pin on which the manually operable lever is pivoted.

Means may be provided to limit the amount of reciprocable movement of the pistons and those means may include an adjustable stop mounted on one of the piston rods whereby the amount of reciprocation of the piston is limited by contact of the adjustable stop with part of the piston cylinder unit, or an adjustable stop may be operable between the manually operating lever and a stationary portion of the apparatus to limit the amount of withdrawal of the piston into the cylinders and hence the amount of fluid fed into the cylinders.

The valve means may be so arranged as to allow ingress or egress of fluid to or from the same end of each cylinder, or alternatively ingress of the fluid may be effected at an end of at least one of the cylinders distal from that end from which the fluid is caused to egress. In the latter case the further means may be provided within the piston to allow passage of fluid from one side of the piston to the other side.

Passageways may be provided to conduct separate fluids from the egress ends of the cylinders to a mixer device where the fluids are mixed before being passed to a further container.

In one form the multiple piston cylinder unit comprises a single cylinder block having two or more cylinders formed therein or, alternatively, the multiple cylinder unit may comprise two or more separate cylinder units.

The above and other various aspects of the invention will become clear from the following description of an apparatus illustrative of the invention given by way of example and not of limitation thereto, with reference to the accompanying drawings in which:-
Figure 1 is a side elevation of one embodiment according to the invention,
Figure 2 is a plan view of parts seen in Figure 1,
Figure 3 is a view similar to Figure 1, but of a different embodiment,
Figure 4 is a plan view of the embodiment seen in Figure 3.

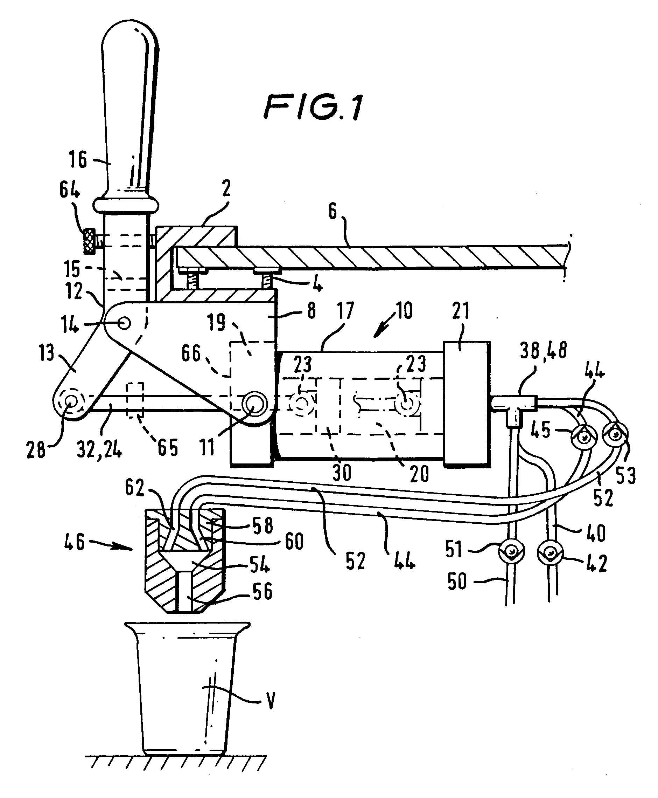

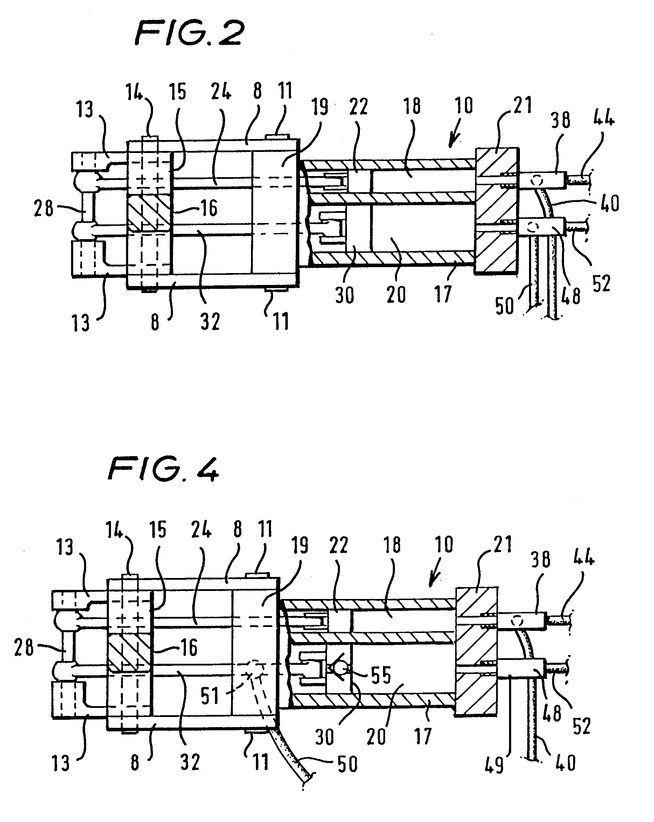

In the illustrative embodiment seen in Figures 1 and 2 the apparatus includes a bracket 2 fixed by clamping screws 4 to a bar counter 6. Extending downwardly from the bracket is a pair of side plates 8 to which is pivoted a cylinder unit 10 by means of pivot pins 11. A lever 12 is pivoted about a pivot pin 14 and is formed with two downwardly depending arms 13 joined by a cross-piece 15. A pump handle 16 is secured to the cross-piece 15.

The cylinder unit 10 comprises a central block 17 which is formed with two separate cylinders 18 and 20 sealed between cylinder heads 19 and 21. The cylinder 18 has a smaller diameter than the cylinder 20. A piston 22 is reciprocable within the cylinder 18 and a piston rod 24 extends from its gudgeon pin 23 to one arm 13 of the lever 12 where it is pivotally connected by means of a pivot pin 28.

Within the cylinder 20 is a second piston 30. A piston rod 32 extends from its gudgeon pin 25 to a second arm of the lever 12 where it is pivotally connected by means of the pivot pin 28.

A bore in the end of the cylinder unit 10, coaxial with the cylinder 18, connects with a Tee-piece 38, and two pipe lines lead from this Tee-piece. One pipeline 40 leads to a supply container of concentrate [not shown] and a one-way valve 42 is provided within that pipeline. A second pipeline 44 leads from the Tee-piece 38 via a one-way valve 45 to a mixer nozzle 46.

A second bore in the end of the cylinder unit 10, coaxial with the cylinder 20 connects with a Tee-piece 48, and a pipeline 50 leads from that Tee-piece via a one-way valve 51 to a supply of water. A second pipeline 52 leads from the Tee-piece 48 via a one-way valve 53 to the mixer nozzle 46.

The nozzle 46 has a hollow conical mixer portion 54 and a bore 56. A cap 58 is formed with two bores 60 and 62 which receive the pipelines 44 and 52 respectively. As seen in Figure 1 the bores 60, 62 are angled towards the face of the conical mixer portion of the nozzle.

In use, the pipeline 40 is connected to the supply of concentrate and pipeline 50 to the supply of water. A drinking vessel V is placed beneath the nozzle 46 and the operator rocks the handle 16 in an anti-clockwise direction as seen in Figure 1 about the pivot pin 14. The lever 12 acts, through the piston rods 24 and 32, to drive the pistons 22 and 30 along their respective cylinders 18 and 20 to the right as seen in Figure 2. Thus the water in cylinder 20 and the concentrate in cylinder 18 are forced along the pipelines 52 and 44, past the one-way valves 45 and 53 and through the bores 60, 62 in the nozzle 46. The water and the concentrate impinge on to the surface of the conical mixer portion 54 which imparts a swirling effect on the liquids resulting in a thorough mixing before the mixed liquid passes through the bore 56 into the drinking vessel.

Return of the handle 16 to its initial position causes withdrawal of the pistons 22 and 30 to the left as seen in Figure 2. Thus water is sucked into the cylinder 20 and concentrate into the cylinder 18, past the one-way valves 51 and 42 respectively, in readiness for the next required serving of the mixed drink.

It is found that the above arrangement provides a simple and inexpensive apparatus for dispensing a mixture of liquids and in particular the ready disassembly of the nozzle 46 for cleaning is in line with the hygiene requirements for catering establishments. The arrangement according to the invention is also found to be advantageous insofar as there is no possibility of a mixture of concentrate and water remaining overnight in a pre-mix container as has been the case in some previously known arrangements.

The volume of the liquids within cylinders 18 and 20 may be varied by means of an adjusting screw 64 threaded through the handle 16 and acting on the bracket 2 and which limits the stroke of the pump handle and thus the pistons 18 and 20.

Alternatively one of the piston rods 24, 32 may be provided with a stop nut shown in chain line at 65, adjustable axially along the rod to limit the stroke of the pistons by its contact with the end face 66 of the cylinder head 19.

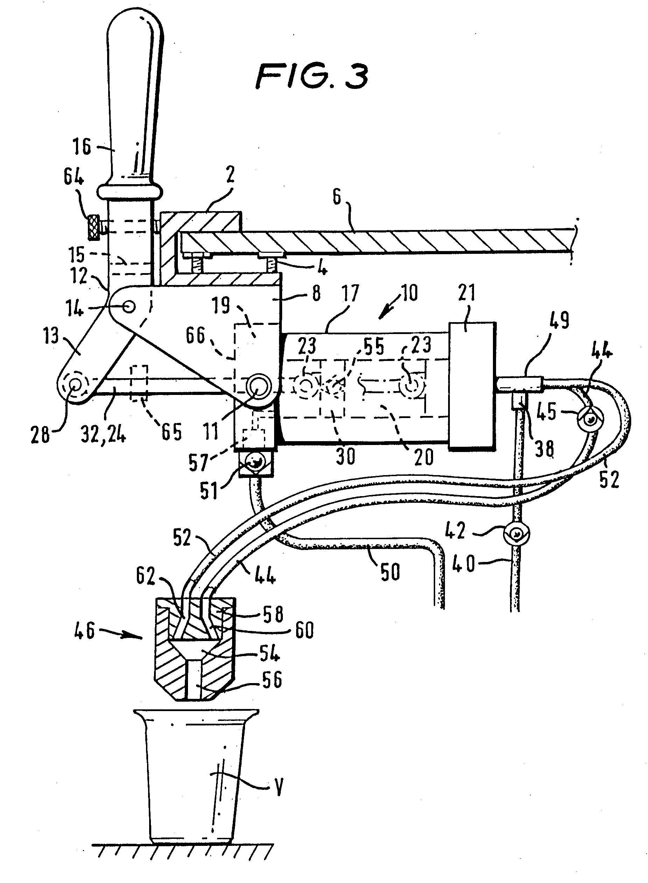

In the alternative embodiment illustrated in Figures 3 and 4 the oneway valve 53 and the Tee-piece 48 are removed from the cylinder head 21 and are replaced by a straight adapter 49 connecting the pipe line 52 with the cylinder 20.

The pipe line 50 from the supply of water connects via a oneway valve 51 through a passage 57 to the bore 20.

The piston 30 is provided with a oneway valve 55 which may be a conventional ball valve, or a flap-type valve.

In use, the handle 16 of the lever is rocked in an anti-clockwise direction about its pivot pin 14 to drive the pistons 22 and 30 along the cylinders 18 and 20 respectively.

The valve 55 closes and water passes through the adaptor 49 and pipe line 52 into the mixer nozzle 46, and at the same time concentrate passes via the Tee-piece 38, valve 45 and pipeline 44 to the mixer nozzle.. The pressure in the concentrate closes the valve 42 to prevent it discharging back into the supply of concentrate. Water from the supply is drawn into the left-hand end of the cylinder 20 through the valve 51 and passage 57 as the piston 30 advances.

Return of the handle 16 retracts the pistons 30 and 22 to the left hand ends of the cylinders 18 and 20 as seen in the drawings, the water passing through the valve 55 to the right hand side of the piston 30. At the same time concentrate passes through valve 42 into the right hand end of the cylinder 18, the valve 45 being closed.

Although the alternative arrangement seen in Figures 3 and 4 shows a valve 55 within the piston 30 and a further valve 51 on the left hand end of the cylinder 20, similar valves may be incorporated in the piston 22 and to the left hand end of the cylinder 18 if so desired.

In a further alternative arrangement, instead of providing two bores 18 and 20 in the single cylinder unit 10 as illustrated, separate cylinder units may be provided, each being separately pivotable about the pivot pin 11.

In a further alternative arrangement a number of holes may be formed in each of the arms 13, the holes being at different centre-distances from the pivot pin 14. By pivotally connecting each piston rod to a pivot pin located at a different centre-distance from the pivot pin 14, the effective lever arm is changed and so the length of stroke of the relevant piston is altered to vary the ratio of concentrate to water in the eventual mixture.

Although the illustrative embodiments described above refer to the mixing of two different fluids by means of cylinder units having two bores, it is within the scope of the invention to provide apparatus for mixing any number of drinks by providing one cylinder and an associated piston valve means and pipeline in respect of each separate fluid to be mixed. In that way a mixture of e.g. lemon juice, lime juice and water may be dispensed.

Although an embodiment of the invention is described with reference to a soft drinks dispenser, the same arrangement may be used for mixing and dispensing other fluids e.g. diluted anti-freeze solutions for use in motor vehicles, mixtures of pesticides and fungicides for use in horticulture, agriculture and other situations where there needs to be a substantially accurate dispensation of a concentrate with water or other liquid.

## Claims

1. Apparatus for dispensing mixed fluids, each in a measured quantity including :
a) a multiple piston cylinder unit (10) having at least two cylinders (18, 20) each having a piston (22, 30) reciprocable therein;
b) means for simultaneously reciprocating the pistons (22, 30);
c) passageways (44, 52) from each cylinder (18, 20) to a fluid mixing nozzle (46); and
d) valve means associated with each passageway (40, 50, 44, 52) to control the ingress and egress of fluid to and from each cylinder (18, 20);
characterised in that
e) said means for reciprocating the pistons (22, 30) includes a manually operable lever (12) connected to the pistons (22, 30) by means of rods (24, 32) pivotally connected to one or more arms (13) of the manually operable lever (12);
f) said multiple piston cylinder unit (10) is pivotally mounted on a bracket (2, 8) secured to a serving area (6); and
g) said bracket (2, 8) also carries a pivot pin (14) on which the manually operable lever (12) is pivoted.

2. Apparatus according to claim 1 characterised in that means are provided to limit the amount of reciprocal movement of the pistons (22, 30).

3. Apparatus according to claim 2 characterised in that the means includes an adjustable stop (65) mounted on one of the piston rods (24) whereby the amount of reciprocation of the piston (22, 30) is limited by contact of the adjustable stop (65) with part of the piston cylinder unit (66).

4. Apparatus according to claim 2 characterised in that the means includes an adjustable stop (64) operable between the manually operating lever (12) and a stationary portion of the apparatus (2) to limit the amount of withdraw of the piston (22, 30) into the cylinders (18, 20) and hence the amount of fluid feed into the cylinders (18, 20).

5. Apparatus according to any one of the preceding claims characterised in that the valve means includes valves (42, 51, 45, 53) so arranged as to allow ingress or egress of fluid to and from the same end of each cylinder (18, 20).

6. Apparatus according to any one of the preceding claims characterised in that ingress of fluid is effected at an end of at least one cylinder distal from that end from which fluid is caused to egress.

7. Apparatus according to claim 6 characterised in that further valve means (55) are provided within a piston (30) to allow passage of fluid from one side of the piston (30) to the other of the same piston (30).

8. Apparatus according to any one of the preceding claims characterised in that there are provided passageways, (44, 52) conducting separate fluids from the egress ends of the cylinders (18, 20) to a mixer device (46) wherein the fluids are mixed before being passed to a further container.

9. Apparatus according to any one of the preceding claims characterised in that the multiple piston cylinder unit (10) comprises a single cylinder block (17) having two or more cylinders (18, 20) formed therein.

10. Apparatus according to any one of the preceding claims characterised in that the multiple cylinder unit (10) comprises two or more separate cylinder units.

## Patentansprüche

1. Vorrichtung zur Abgabe von gemischten Flüssigkeiten jeweils in einer gemessenen Menge, umfassend:
a) eine Mehrkolben-Zylindereinheit (10) mit wenigstens zwei Zylindern (18,20), in deren jedem ein Kolben (22,30) hin und her bewegbar ist;
b) Mittel zur gleichzeitigen Hin- und Herbewegung der Kolben (22,30);
c) Leitungen (44,52), die von jedem Zylinder (18,20) zu einer Flüssigkeitsmischdüse (46) führen, und
d) eine mit jeder Leitung (40,50) verbundene Ventileinrichtung (44,52) zur Steuerung des Eintritts und Austritts von Flüssigkeit in und aus jedem Zylinder (18,20);
dadurch gekennzeichnet, daß
e) die Mittel zur Hin- und Herbewegung der Kolben (22,30) einen manuell betätigbaren Hebel (12) umfassen, der mittels Stangen (24,32), die mit einem oder mehreren Armen (13) des manuell betätigbaren Hebels (12) schwenkbar verbunden sind, mit den Kolben (22,30) verbunden ist;
f) die Mehrkolben-Zylindereinheit (10) schwenkbar an einer Halterung (2,8) montiert ist, die an einer Theke (6) befestigt ist, und
g) die Halterung (2,8) auch einen Schwenkzapfen (14) trägt, an welchem der manuell betätigbare Hebel (12) schwenkbar gelagert ist.

2. Vorrichtung nach Anspruch 1, dadurch gekennzeichnet, daß Mittel zur Begrenzung des Betrags der Hin- und Herbewegung der Kolben (22,30) vorgesehen sind.

3. Vorrichtung nach Anspruch 2, dadurch gekennzeichnet, daß die Mittel einen einstellbaren Anschlag (65) umfassen, der an einer der Kolbenstangen (24) montiert ist, wodurch der Betrag der Hin- und Herbewegung des Kolbens (22,30) durch den Kontakt des einstellbaren Anschlags (65) mit einem Teil der Kolben-Zylindereinheit (66) begrenzt wird.

4. Vorrichtung nach Anspruch 2, dadurch gekennzeichnet, daß das Mittel einen einstellbaren Anschlag (64) umfaßt, der zur Begrenzung des Betrags des Rückzugs des Kolbens (22,30) in die Zylinder (18,20) und somit der Menge der in die Zylinder (18,20) gespeisten Flüssigkeit zwischen dem manuellen Betätigungshebel (12) und einem stationären Bereich der Vorrichtung (2) betätigbar ist.

5. Vorrichtung nach einem der vorhergehenden Ansprüche, dadurch gekennzeichnet, daß die Ventileinrichtung Ventile (42,51,45,53) umfaßt, die derart angeordnet sind, daß sie den Eintritt und Austritt von Flüssigkeit in und aus demselben Ende eines jeden Zylinders (18,20) erlauben.

6. Vorrichtung nach einem der vorhergehenden Ansprüche, dadurch gekennzeichnet, daß der Eintritt von Flüssigkeit an einem Ende von wenigstens einem Zylinder bewirkt wird, das dem Ende abgewandt ist, an welchem der Austritt von Flüssigkeit bewirkt wird.

7. Vorrichtung nach Anspruch 6, dadurch gekennzeichnet, daß weitere Ventilmittel (55) in einem Kolben (30) vorgesehen sind, die einen Durchtritt von Flüssigkeit von der einen Seite des Kolbens (30) zur anderen Seite desselben Kolbens (30) erlauben.

8. Vorrichtung nach einem der vorhergehenden Ansprüche, dadurch gekennzeichnet, daß Leitungen (44,52) vorgesehen sind, die separate Flüssigkeiten von den Austrittsenden der Zylinder (18,20) zu einer Mischvorrichtung (46) leiten, in welcher die Flüssigkeiten gemischt werden, bevor sie in einen weiteren Behälter geleitet werden.

9. Vorrichtung nach einem der vorhergehenden Ansprüche, dadurch gekennzeichnet, daß die Mehrkolben-Zylindereinheit (10) einen einzigen Zylinderblock (17) umfaßt, in welchem zwei oder mehrere Zylinder (18,20) ausgebildet sind.

10. Vorrichtung nach einem der vorhergehenden Ansprüche, dadurch gekennzeichnet, daß die Mehrkolben-Zylindereinheit (10) zwei oder mehr getrennte Zylindereinheiten umfaßt.

## Revendications

1. Appareil pour distribuer des fluides mélangés, chacun en une quantité mesurée, comportant:
a) un ensemble piston-cylindre multiple (10) comprenant au moins deux cylindres (18, 20) ayant chacun un piston (22, 30) pouvant avoir un mouvement de va-et-vient;
b) des moyens pour donner simultanément un mouvement de va-et-vient aux pistons (22, 30);
c) des passages (44, 52), de chaque cylindre (18, 20), à une buse (46) de mélange des fluides; et
d) des moyens de vannage associés à chaque passage (40, 50, 44, 52) pour commander l'entrée et la sortie du fluide vers, et depuis, chaque cylindre (18, 20);
caractérisé par le fait que
e) lesdits moyens pour donner aux pistons (22, 30) un mouvement de va-et-vient comportent un levier (13) manoeuvrable manuellement, relié aux pistons (22, 30) par l'intermédiaire de de bielles (24, 32) reliées de façon pivotante à un ou plusieurs bras (13) du levier (12) manoeuvrable manuellement;
f) l'ensemble piston-cylindre multiple (10) est monté de façon pivotante sur une console (2, 8) fixée à une surface de service (6);
g) ladite console (2, 8) porte également un axe de pivotement (14) sur lequel pivote le levier (12) manoeuvrable manuellement est pivoté.

2. Appareil selon la revendication 1, caractérisé par le fait que des moyens sont prévus pour limiter la valeur du mouvement de va-et-vient du piston (22, 30).

3. Appareil selon la revendication 2, caractérisé par le fait que les moyens comportent une butée ajustable (65) montée sur l'une des bielles (24) de piston, et grâce à laquelle la valeur du mouvement de va-et-vient du piston (22, 30) est limitée par contact de la butée ajustable (65) avec une partie de l'ensemble piston-cylindre (66).

4. Appareil selon la revendication 2, caractérisé par le fait que les moyens comportent une butée ajustable (64) qui peut fonctionner entre le levier à manoeuvre manuelle (12) et une portion fixe de l'appareil (2) pour limiter la valeur du recul du piston (22, 30) dans les cylindres (18, 20) et donc la quantité de fluide amenée dans les cylindres (18, 20).

5. Appareil selon l'une quelconque des revendications précédentes, caractérisé par le fait que les moyens de vannage incluent des vannes (42, 51, 45, 53) disposés de façon à permettre l'entrée ou la sortie du fluide vers, et depuis, la même extrémité de chaque cylindre (18, 20).

6. Appareil selon l'une quelconque des revendications précédentes, caractérisé par le fait que l'entrée des fluides s'effectue à une extrémité d'au moins un cylindre éloignée de l'extrémité par laquelle le fluide doit sortir.

7. Appareil selon la revendication 6, caractérisé par le fait que des moyens de vannage (55) sont en outre prévus à l'intérieur d'un piston (30) pour permettre le passage du fluide, d'un côté du piston (30) à l'autre côté du même piston (30).

8. Appareil selon l'une quelconque des revendications précédentes, caractérisé par le fait que sont prévus des passages (44, 52) conduisant des fluides distincts, depuis les extrémités de sortie des cylindres (18, 20), à un dispositif mélangeur (46) dans lequel les fluides sont mélangés avant de passer dans un autre conteneur.

9. Appareil selon l'une quelconque des revendications précédentes, caractérisé par le fait que l'ensemble piston-cylindre multiple (10) comporte un unique bloc-cylindre (17) ayant deux ou plusieurs cylindres (18, 20) formés dedans.

10. Appareil selon l'une quelconque des revendications précédentes caractérisé par le fait que l'ensemble cylindre multiple (10) comporte deux ou plusieurs ensembles cylindre distincts.
